# EUROPÄISCHE PATENTSCHRIFT

(11) **EP 0 527 244 B1**
(45) Veröffentlichungstag und Bekanntmachung des Hinweises auf die Patenterteilung: **18.10.1995**
(21) Anmeldenummer: 91113145.6
(22) Anmeldetag: 05.08.1991
(51) Int. Cl.: G21C 3/356

(54) **Abstandhalter für Brennelemente mit gekrümmten, aufgesetzten Federn**
Spacer grid for fuel elements with curved attached springs
Grille entretoise pour éléments combustibles avec ressorts courbes rapportés

(43) Veröffentlichungstag der Anmeldung: 17.02.1993
(73) Patentinhaber: SIEMENS AKTIENGESELLSCHAFT, 80333 München (DE)
(72) Erfinder: Steinke, Alexander, Dipl.-Ing., W-8553 Ebermannstadt (DE)

(56) Entgegenhaltungen:
- EP-A- 0 033 263
- EP-A- 0 141 208
- EP-A- 0 395 509
- DE-A- 1 814 297
- DE-A- 3 139 823
- FR-A- 2 449 324
- US-A- 3 679 546

## Beschreibung

Die Erfindung betrifft einen gitterförmigen Abstandhalter für Brennelemente mit Gittermaschen, durch die Stäbe geführt sind, und Federn zum seitlichen Abstützen der Stäbe an Stegen des Gitters, wie er im Oberbegriff des Anspruchs 1 angegeben und bereits in der US-PS 3.679.546 beschrieben ist.

Brennelemente von Kernreaktoren enthalten stets ein Bündel von Brennstäben, in dem bei Druckwasserreaktoren noch als Führungsrohre oder Instrumentierungsrohre ausgebildete Stäbe verteilt sind oder bei Siedewasserreaktoren sogenannte "Wasserstäbe" enthalten sein können. Diese besonders ausgebildeten Stäbe haben oft einen größeren Querschnitt als die Brennstäbe und sind über nichtelastische Elemente in mehreren axialen Positionen mit gitterförmigen Abstandhaltern verbunden.

Die Gittermaschen der Abstandhalter sind von Stegen gebildet, die zwischen den Stäben des Stabbündels verlaufen und quer zu den Stäben ausgerichtet sind. Diese Stege dienen dazu, die seitliche Position der Stäbe zu fixieren. So sind z. B. nach Fig. 2 bis 6 der DE-OS 28 23 899 und Fig. 9 der EP-B-0 033 263 von sich kreuzenden Stegen eckige Gittermaschen gebildet. Bis auf Gittermaschen, die von den erwähnten Führungsrohren, Instrumentierungsrohren oder Wasserstäben durchsetzt sind, enthalten bei diesen bekannten Abstandhaltern alle Maschen zwei Federn, die in der Mitte zwischen zwei Maschenecken angeordnet sind.

Jede dieser Federn weist mindestens einen Mittelteil auf, der konvex um eine zum Stabbündel senkrechte Krümmungsachse gekrümmt ist und die Form eines Zylindersegments hat. An ihm ist der jeweilige Stab abgestützt.

Bei diesen bekannten Federn geht der Mittelteil an den beiden in Richtung des Stabbündels anschließenden Seitenflächen in konkaven Krümmungen in zwei zum Stabbündel parallele Schenkel über, die an der dem Stab zugewandten Seite eines der Stege, die die Gittermasche bilden, abgestützt sind. Dabei ist einer der beiden Schenkel haarnadelförmig um einen Rand des Steges gebogen und bildet eine formschlüssige Befestigung der Feder am Steg. Dieser herumgebogene Schenkel kann auf der Rückseite des Steges spiegelbildlich zu den Federteilen auf der Vorderseite des Steges ausgebildet sein, so daß eine zwei nebeneinander liegenden Maschen gemeinsame, flach an einem gemeinsamen Steg anliegende Doppelfeder entsteht.

Diese Feder kann nicht an den Randstegen von Abstandhaltern in Druckwasserreaktoren verwendet werden, da die Außenflächen derartiger Abstandhalter glatt sein müssen, um ein Verhaken mit benachbarten Brennelementen zu vermeiden.

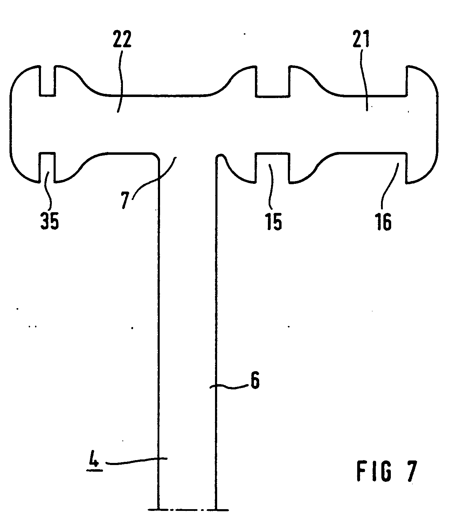

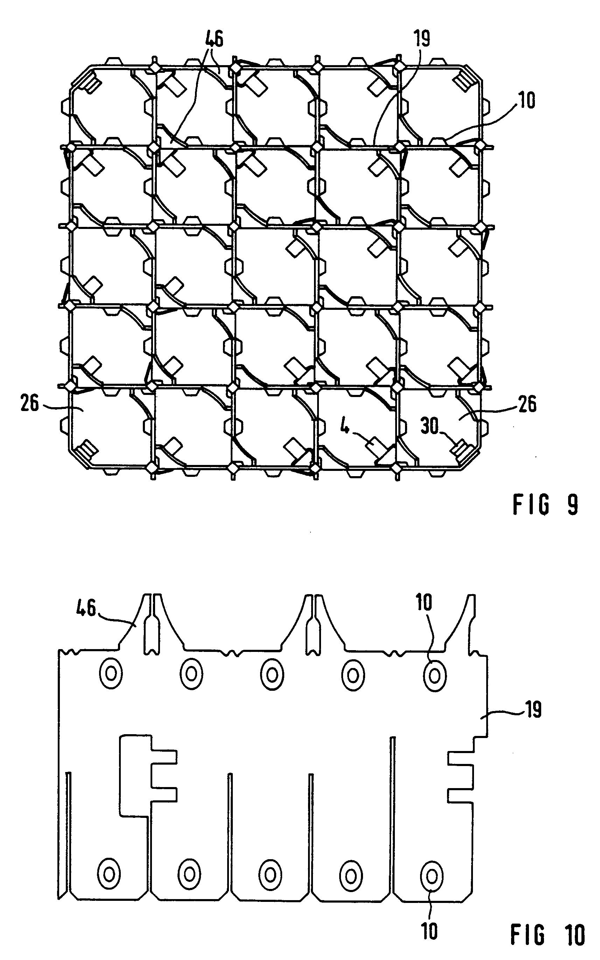

Eine andere Art der Befestigung ist in der EP-A-0 141 208 beschrieben. Dabei ragt ein tellerförmiger Mittelteil diagonal in die Masche, also von der Kreuzungsstelle zweier Stege des Abstandhalters. Dieser Mittelteil geht an seinem oberen und unteren Ende jeweils in ein Federende über, das über seitliche Laschen so an den beiden sich kreuzenden Stegen abgestützt und verriegelt ist, wie es auch in den folgenden Figuren 7 und 8 beschrieben ist. Diese Feder kann zwar nicht mehr ausgewechselt werden, sobald der Abstandhalter montiert ist, aber auch nicht verloren gehen. Jedoch sind die Federwege und der entsprechende Hub der Feder sehr kurz, so daß besondere Federmaterialien erforderlich sind, um die für eine günstige Halterung der Stäbe wünschenswerte Haltekraft (Federcharakteristik) zu erzeugen.

Eine Feder mit einem tellerförmigen Querschnitt zeigen auch die Figuren 5 bis 7 der DE-AS 1 489 632. Die Maschen des Gitters werden dabei von Hülsen gebildet, die über die Brennstäbe geschoben und miteinander verschweißt sind.

Nach Fig. 4 dieser DE-AS 1 489 632 ist auch ein C-förmiger Querschnitt des Mittelteils möglich, der an den Federenden mit zwei konvexen Krümmungen in die Schenkel übergeht. Die Schenkel sind durch ein Fenster im Steg hindurch auf der Stegrückseite bis zum oberen und unteren Hülsenrand geführt, wo sie um den Steg herumgebogen und wieder form- und kraftschlüssig gehalten sind. Zum Einsetzen der Feder ist das Fenster mindestens so groß, daß der c-förmige Mittelteil ganz hineinpaßt und in ihnen frei beweglich ist. Dadurch entsteht ein sehr langer Federweg, der zwar eine höhere Elastizität der Feder gegenüber den tellerförmigen Federformen sicherstellt, da aber erst die kraftschlüssige Verbindung der umgebogenen Schenkelenden zum Abstützen der Federn am Steg zur Verfügung steht, entsteht eine ungünstige Kraftverteilung. Nachteilig ist ferner, daß diese C-förmige Feder nicht als Doppelfeder ausgebildet werden kann und daher nur für hülsenförmige Gitterstege anwendbar ist.

Das gleiche gilt für die C-förmige Feder der eingangs erwähnten US-A-3.679.546, die jeweils von der Mitte einer Maschenseite aus in die Masche ragt. Die beiden konvex gebogenen Enden dieser C-förmigen Feder sind zunächst jeweils an der Seitenfläche des Stegs abgestützt und greifen dann klammerartig durch entsprechende Fenster des Steges. Die Feder kann zwar nachträglich eingesetzt oder ausgewechselt werden, kann sich aber z. B. lösen, wenn zu Inspektions- oder Reparaturzwecken ein Brennstab im Abstandhalter ausgewechselt wird. Um drei annähernd äquidistant am jeweiligen Brennstab angreifende Anlagepunkte in jeder Masche zu erhalten, müssen außerdem die Stege zu beiden Seiten der Feder besonders gebogen sein, so daß nicht-quadratische, irregulär geformte Maschen entstehen. Durch die C-Form, die sich praktisch über die ganze Höhe des Steges erstreckt, kann zwar ein Federteil mit günstiger Elastizität geschaffen werden, jedoch sind die konvex gebogenen Federenden praktisch ohne Abstand am Steg abgestützt, so daß kein weiterer Federweg entsteht und die Federcharakteristik praktisch nur von der Elastizität des C-förmigen Mittelteils bestimmt ist.

Die Brennstäbe werden in den Gittermaschen durch die Federn meist gegen Anschlagnoppen in den Maschen gedrückt. Bei der Auslegung der Feder ist die hohe Belastung der Feder durch auftretende Temperaturschwankung von ca. 300 °C, das Auftreten einer turbulenten Strömung, eine Durchmesseränderung der Stäbe durch Druckbelastung und die Vergrößerung der Abstandhalterzelle sowie der Verlust der Federkraft durch Neutronenstrahlung zu berücksichtigen. Durch die mit einer großen Strömungsgeschwindigkeit verbundene turbulente Strömung des Kühlmittels kommt es zu Vibration der Brennstäbe. Die Brennstäbe reiben dabei an den Lagerstellen und der Feder, wodurch es zu Materialermüdung an den Anschlagnoppen, der Feder und den Brennstäben kommt. Der Abstandhalter hat deshalb die Aufgabe ein Bündel von parallelen Brennstäben so zu lagern, daß an den Lagerstellen kein Fretting auftritt. Die verschiedenen Federformen erfüllen diese Anforderungen in ganz unterschiedlicher Weise und erfordern bestimmte, oft schwer realisierbare Materialeigenschaften. Darüber hinaus muß aber auch auf einen geringen Strömungswiderstand und Druckverlust des Kühlmittelstroms an den Federn geachtet werden.

Der Erfindung liegt die Aufgabe zugrunde, einen neuen, diesen Anforderungen besonders angepaßten Abstandhalter zu schaffen, der insbesondere durch besonders vorteilhafte Elastizitätseigenschaften ein sicheres Abstützen der Stäbe ermöglicht. Dieser neue Abstandhalter besitzt die im Anspruch 1 aufgeführten Merkmale.

Die Feder beschreibt also im unbelasteten Zustand eine C-Form mit einem sich zwischen zwei Schenkeln erstreckenden Hohlzylinder-Segment, wie bei der erwähnten US-A-3.679.546, die aber als Diagonalfeder ausgebildet ist.

Bei dieser Formgebung kommen die an den Mittelteil anschließenden Schenkel zwischen dem Mittelteil und massiven Teilen der Stege zu liegen, an denen sie abgestützt und formschlüssig gehalten sind.

Sofern überhaupt eine Fensteröffnung im Steg erforderlich ist, um die Feder einzusetzen, kann diese Fensteröffnung in Richtung der Krümmungsachse gegenüber dem Mittelteil versetzt sein, und außerdem kann der zum Einsetzen der Feder erforderliche Querschnitt der Fensteröffnung kleiner als der Querschnitt des Mittelteils gewählt werden, da durch Druck auf die Federenden der Mittelteil vorübergehend und elastisch soweit zusammengebogen werden kann, daß er auch durch ein kleineres Fenster durchgeführt werden kann. Daher stehen im montierten Zustand des Abstandhalters Teile des Mittelteils massiven Stegteilen gegenüber, d.h. sie verdecken gegebenenfalls Teile der erwähnten Fensteröffnung, mindestens aber auch massive Stegteile, die daher zur Verfügung stehen, um die Schenkel in einem verhältnismäßig großen Abstand von den konvexen Krümmungen an den Stegen abzustützen und formschlüssig zu halten. Im Extremfall können die Schenkel etwa in der Mitte zwischen der Oberkante und der Unterkante der Stege abgestützt sein, der Abstand also praktisch die halbe Länge des C-förmigen Teils betragen. Der Federweg, der im Fall der US-A-3.679.546 nur durch die Längenausdehnung des C-förmigen Teils gegeben ist, wird dadurch um die Länge der Schenkel vergrößert, im Extremfall also nahezu verdoppelt.

Außerdem kann sich bei gegebener axialer Höhe des Abstandhalters der Mittelteil fast bis zu den Rändern der Stege erstrecken, so daß ein großer Federweg (d.h. Federlänge) in Richtung des Stabbündels entsteht. Die C-Form selbst gewährleistet auch einen großen Federhub bei Belastung der Feder, so daß ein Brennstab einerseits leicht in die Masche eingesetzt oder daraus herausgezogen werden kann, andererseits bei niedrigem Spannungsniveau mit einem an die Anforderungen angepaßten Druck eingespannt ist. Die Spannungsverteilung in der Feder ist günstig und führt zu hervorragenden Elastizitätseigenschaften auch bei langen Einsatzdauern.

Überdies ist die Feder in den Maschenecken mit einem diagonal nach innen ragenden Mittelteil angeordnet, wobei die Schenkel sich an zwei einander kreuzenden Stegen abstützen. Die beiden Stege, die an der der Feder gegenüberliegenden Seite zusammenstoßen, können entsprechende starre Anlagenoppen tragen, so daß dann in den Maschen eine zweite elastische Feder entbehrlich wird. Dies führt zu einem überraschend niedrigen Druckverlust. Derartige Diagonalfedern können als Doppelfedern ausgebildet sein.

Vorteilhafte Ausführungsformen und Einbaumöglichkeiten der Feder in den Abstandhalter werden in weiteren Ansprüchen angegeben.

Die Erfindung einschließlich der erreichten Vorteile wird anhand von drei Ausführungsbeispielen und der Figuren 1 bis 17 näher erläutert. In der Zeichnung zeigen:
- FIG 1 + 2: zwei Beispiele des erfindungsgemäßen Abstand halters in perspektivischen Teilansichten;
- FIG 3: eine Draufsicht auf eine Masche des Abstandhal ters mit Einzelfeder;
- FIG 4: Seitenansichten von Stegteilen mit Steck schlitzen und zum Einführen und Verriegeln der Feder;
- FIG 5: einen Querschnitt durch eine Masche eines Ab standhalters mit Brennstab;
- FIG 6 - 8: die erfindungsgemäße Ausführung der Feder als Einzelfeder in Seitenansicht und Draufsicht sowie in einer auf eine Ebene abgewickelten Darstellung der oberen Federteile;
- FIG 9: eine Draufsicht auf den Abstandhalter mit einge bauten Einzelfedern und Eckfedern für einen Siedewasser-Reaktor;
- FIG 10: eine Seitenansicht eines Steges des Abstand halters mit eingebauten Einzelfedern;
- FIG 11 + 12: die erfindungsgemäße Ausführung der Feder als Eckfeder in Längsschnitt und Draufsicht
- FIG 13 - 15: die erfindungsgemäße, entsprechend den Figuren 6 bis 8 dargestellte Ausführung der Feder als Doppelfeder;
- FIG 16: eine Draufsicht auf den Abstandhalter mit eingebauten Doppelfedern und eine Einzelfeder;
- FIG 17: eine Seitenansicht eines Steges des Abstandhalters zum Einbau von Doppelfedern;

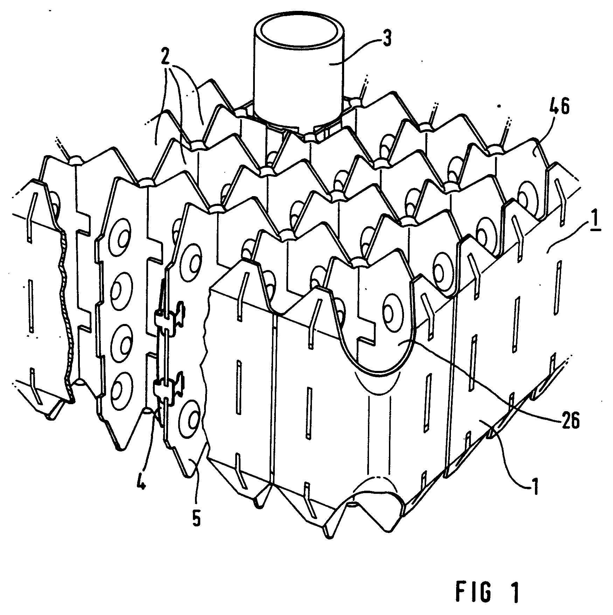

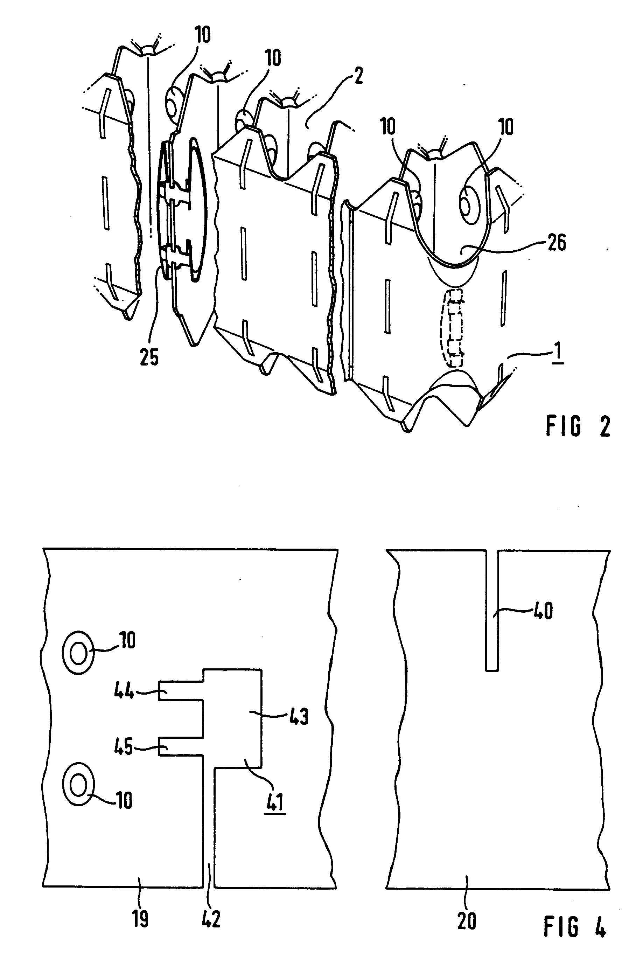

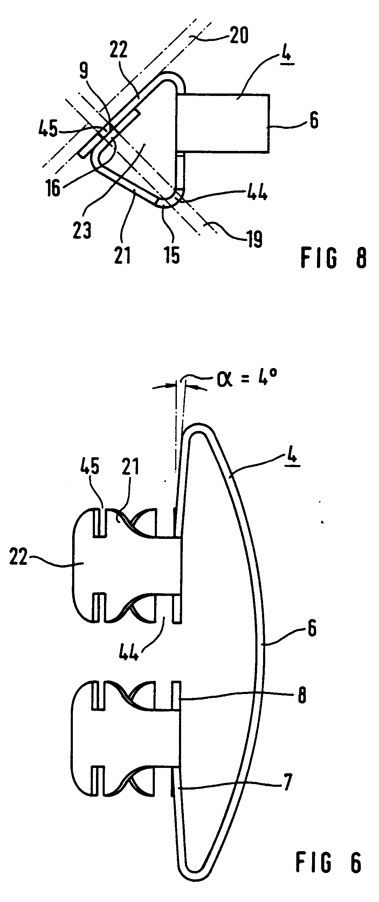

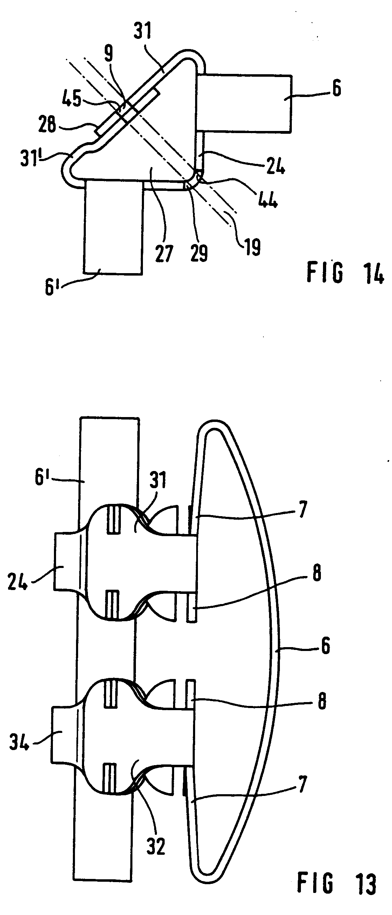

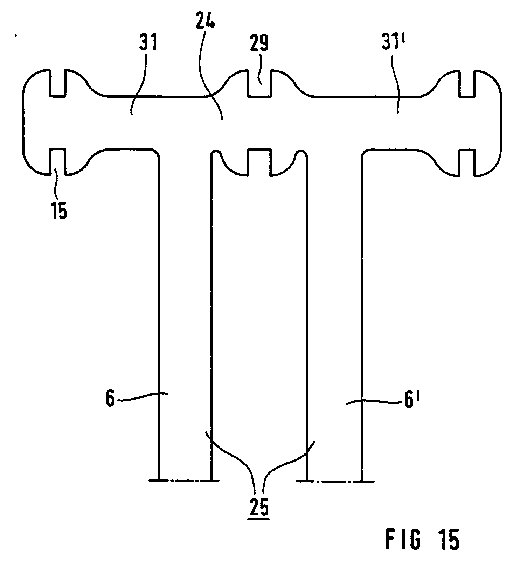

Der gitterförmige Abstandhalter 1 (Figuren 1 und 2) für Brennelemente enthält Gittermaschen 2, durch die Stäbe 3, insbesondere die Brennstäbe und Führungsrohre eines Druckwasserreaktors, geführt sind, und Federn zum seitlichen Abstützen der Stäbe 3 an Stegen 5 des Gitters. Er hat bei Fig. 1 in den Maschen eine Feder 4 (Fig. 6 bis 8) bzw. nach Fig. 2 eine Feder 25 (Fig. 13 bis 15) mit einem zum Stab 3 hin konvex gekrümmten Mittelteil 6 mit einer zum Stab ungefähr senkrechten Krümmungachse und zwei an den Mittelteil 6 anschließenden Federenden 7 mit jeweils einem an dem Steg 5 gehalterten Schenkel 8, der ungefähr parallel zum Stab verläuft. Bei diesen Federn ist nicht nur der Mittelteil 6 konvex zum Stab 3 hin gekrümmt, vielmehr geht auch der Mittelteil 6 jeweils mit einer konvexen Krümmung in die Schenkel 8 der Federenden 7 über. Diese Federform weist eine sehr hohe Elastizität bei großer Federlänge und ausreichendem Federweg auf. Brennstäbe können leicht gezogen und wieder eingesetzt werden. Durch die kleine Auflagefläche zwischen Feder 4 und Brennstab 3 wird Fretting weitgehend vermieden.

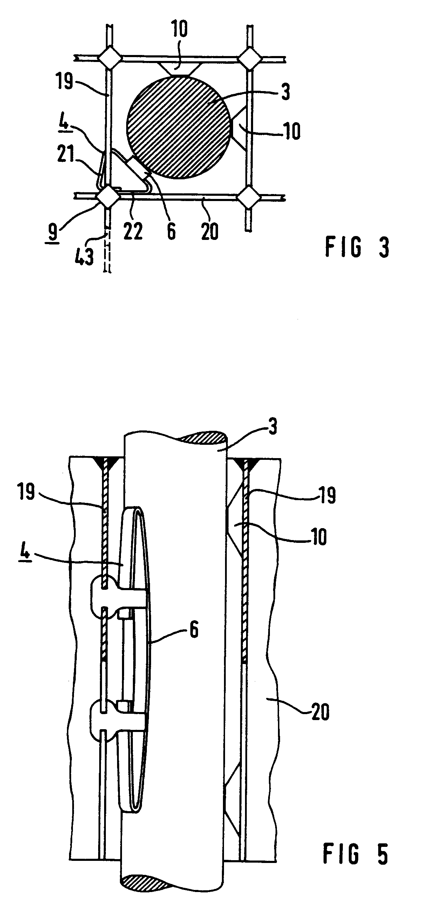

Die Gittermaschen 2 werden von sich kreuzenden Stegen 5 gebildet. Fig. 3 zeigt einen Teil eines ersten Steges 19 und eines zweiten Steges 20, die an der Kreuzungsstelle entsprechende Steckschlitze 40, 42 tragen, mit den sie ineinander greifen. Der Steg trägt an der Kreuzungsstelle eine Öffnung, durch die die Feder eingeführt werden kann, wobei die Feder gegebenenfalls durch leichten Druck zusammengedrückt werden kann, um mit kleineren Öffnungen auszukommen. Durch Einsetzen des Steges 20 ist die Feder dann am Steg 19 so verriegelt, daß sie an den dem Stab zugewandten Innenflächen der die Maschine bildenden Stege 19 und 20 mit ihren Schenkeln anliegt und formschlüssig am Steg 19 gehalten ist.

Wie aus Figur 3 ersichtlich, ist die Feder 4 bevorzugt an den Kreuzungsstellen 9 der Stege 19 und 20 angeordnet und diagonal in die Gittermaschen 2 hineingerichtet. Jede Gittermasche 2 weist vorzugsweise einen quadratischen Querschnitt auf und trägt außer der Feder 4 noch zwei Anschlagnoppen 10 für einen Stab 3. Die Anschlagnoppen 10 sind an den zwei der Feder gegenüberliegenden Seiten der Masche angeordnet. Die Feder 4 stützt so den Stab 3 gegen die Anschlagnoppen 10 ab, wobei die erfindungsgemäße Federform sehr geeignet zum Dämpfen der auftretenden Vibrationen ist (Figuren 1 und 5).

Eine Ansicht der erfindungsgemäßen Feder 4 ist in Figur 6 gegeben. Ihre Form ist einem Hohlzylindermantelsegment ähnlich, das mit einer konvexen Krümmung in zwei Schenkel 8, die an der Innenseite der Stege gehaltert sind, an den Federenden 7 übergeht. Von Vorteil ist es, wenn der Krümmungsradius der Feder 4 in etwa der axialen Erstreckung der Feder 4 im Einbauzustand entspricht. Durch diese Bauweise wird ein niedriges Spannungsniveau realisiert, das einem optimalen Abstützen der Feder unter den vorliegenden Bedingungen entspricht. Bei der Fertigung ist vorteilhaft, wenn die Krümmungsradien der Federenden 7 der Wanddicke der Feder 4 angepaßt sind. Bei einer Feder aus einer Nickelbasis-Legierung kann z.B. der innere Krümmungsradius der Federenden etwa das 1- bis 2-fache der Federdicke betragen.

Erfindungsgemäß läuft die Feder bevorzugt in Schenkeln 8 aus, deren an die konvexe Krümmung anschließende Teile zumindest vor dem Einbau eines Brennstabs gegen die Stege geneigt sind und aufeinander zulaufen. Vorteilhaft ist es, wenn der Neigungswinkel klein, d.h. unter 10°, günstigerweise etwa 4°, gehalten ist. Die Schenkel 8 der Feder 4 laufen bis auf einen gewissen Abstand aufeinander zu. Durch diese Distanz zwischen den Federenden 7 wird ein Zusammendrücken der Federenden 7 beim Einsetzen in die Gittermaschen 2 möglich. Wenigstens ein Federende 7, vorzugsweise beide, trägt ein Profil, mit dem die Feder 4 formschlüssig an einem Steg 5 befestigt ist. Eine Befestigung über ein Federende 7 ist möglich, eine zweite Befestigung am anderen Federende 7 bringt jedoch zusätzliche Stabilität. Fig. 9 zeigt einen Abstandhalter eines Siedewasser-Brennelementes, Fig. 10 den Steg 19 dieses Abstandhalters.

Bei dieser besonders zweckmäßigen Ausführungsform sind in den Eckmaschen des Abstandhalters Einzelfedern 30 angeordnet.

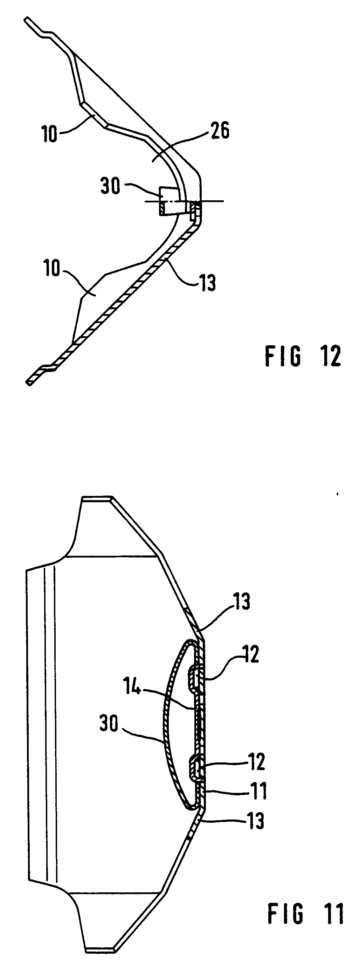

Bei Druckwasser-Reaktoren sind die Außenstege ohne überstehende Federenden ausgestattet, insbesondere sind die Einzelfedern 30 der Eckmaschen 26 des Abstandhalters 1 so befestigt, daß keine Kanten, Vorsprünge oder Durchbrüche vorhanden sind, die bei benachbarten Brennelementen ein Abgleiten der Abstandhalter aneinander behindern. Die entsprechende Halterung der Eckfeder ist in den Figuren 11 und 12 schematisch dargestellt. Figur 11 zeigt ein Ausführungsbeispiel einer Eckfeder 30, die in der Ecke (Fig. 12) einer Eckmasche 26 des Abstandhalters 1 befestigt ist. Mindestens ein Federende 7, vorzugsweise beide, sind mit wenigstens einer Öffnung 12 versehen, durch die wenigstens eine am Steg bzw. der Stegecke 13 befestigte Klammer 14 greift. Bei geeignetem Material für die Klammer kann diese vorteilhaft mit dem Stegblech verschweißt werden.

Im dargestellten Fall sind der Abstandhaltersteg, die Abstandhalterecke sowie die Klammer 14 aus Zirkaloy, während die Feder 4 aus einer Nickelbasislegierung besteht. Durch das Verschweißen der Klammer 14 mit dem Abstandhaltersteg kann die Feder 4 formschlüssig gehalten werden. Durch die dargestellte Befestigungsmöglichkeit wird die Außenkontur der Stege im Eckbereich des Abstandhalters 1 nicht gestört und auch die Form der Stege 5 nicht beeinflußt. So können durch diese Einbauvariante der Feder bei der fernbedienten Handhabung der Bauelemente im Reaktorkern Störungen, wie z.B. gegenseitiges Verhaken, vermieden werden.

Ein weiteres Ausführungsbeispiel einer Einzelfeder, die für ein Druckwasser-Brennelement der Fig. 1 oder ein Siedewasser-Brennelement der Fig. 9 geeignet ist, ist bereits in den Figuren 6, 7 und 8 gezeigt. Ein Federende 7 der Feder 4 trägt zwei seitliche Laschen, über die die Feder 4 an einem ersten Steg 19 befestigt werden kann. Dazu sind in einem zweiten Steg 20 Öffnungen, die als Schlitze 40 ausgebildet sind (Fig. 4), und dem senkrecht dazu angeordneten ersten Steg 19 Durchbrüche 41, die der Federform angepaßt sind, vorgesehen. Die Durchbrüche in den Stegen sind in Figur 8 dargestellt. Eine Befestigung der Feder über solche ineinander eingreifenden Durchbrüche und Schlitze ist bereits üblich. Die beiden Laschen 21, 22 werden zu einem Dreieck 23 gebogen, an dessen einer Seite sich der Mittelteil 6 der Feder 4 befindet.

Der Durchbruch 41 besteht aus einer Montageöffnung 43 auf einer Seite eines Schlitzes 42 und aus wenigstens einer (z.B. die dem oberen Federende zugeordnete Öffnung 44) auf der anderen Seite des Schlitzes. Zur Montage wird die Feder zunächst so in die Montageöffnung eingeführt, daß die Lasche 21 auf der einen Seite des ersten Stegs 19, z.B. der Rückseite, der konvexe Mittelteil 6 auf der anderen Seite (z.B. Vorderseite) zu liegen kommt. Dann wird die Feder 4 seitlich versetzt, so daß die Lasche 21 in die Öffnung 44 hineingeschoben ist und dort den Steg 19 durchsetzt. Dabei wird der Schlitz 42 freigegeben und kann den zweiten Steg 20 aufnehmen, der in dieser Stellung dann die Feder arretiert.

Wie aus Figuren 3 bis 8 ersichtlich, trägt vorteilhaft die erste der beiden Laschen (Lasche 21) eine Kerbe 15 und durchsetzt die Öffnung 44 des ersten Stegs 19. Die Lasche 21 wird mit der Kerbe 15 in der Öffnung dieses ersten Stegs 19 formschlüssig gehalten. Die zweite Lasche 22 liegt an dem den ersten Steg 19 kreuzenden zweiten Steg 20 auf. Vorteilhaft ist es, wenn die erste Lasche die Öffnung des ersten Stegs 19 zweimal durchsetzt und wenigstens noch eine zweite Kerbe 16 zur formschlüssigen Halterung der ersten Lasche 21 vorgesehen ist.

Es erweist sich als günstig, wenn die zweite Lasche 22 ebenfalls eine Öffnung des ersten Stegs 19 durchsetzt und wenigstens eine Kerbe 35 trägt, mit der sie in der Öffnung dieses ersten Stegs 19 formschlüssig gehalten ist.

In den Figuren 3 und 9 wird deutlich, daß nach der Befestigung die den ersten Steg 19 durchsetzende erste Lasche 21 auf die der Gittermasche 2 abgewandte Seitenfläche des ersten Stegs 19 übergreift und die zweite Lasche 22 an der der Gittermasche 2 zugewandten Seitenfläche des zweiten Stegs 20 anliegt.

Von Vorteil ist es, wenn das zweite Federende ebenfalls zwei seitliche Laschen trägt, die eine zweite Öffnung 45 des ersten Stegs 19 durchsetzen, und in der zweiten Öffnung 45 des ersten Steges analog zu der Verfahrensweise bei dem ersten Federende befestigt ist.

Mit den bisher beschriebenen beiden Ausführungsformen läßt sich der Abstandhalter 1, wie aus den Figuren 9 und 1 ersichtlich, sowohl für Siedewasser- wie für Druckwasser-Brennelemente verwenden. Der Abstandhalter 1 kann einen rechteckigen Querschnitt aufweisen, wobei die Eckmaschen 26 des Gitters jeweils eine der beschriebenen Eckfedern 30, die von der Ecke des Querschnitts diagonal in die Eckmasche 26 gerichtet ist, tragen. Die anderen Gittermaschen 2 tragen die Einzelfedern 4, die in der beschriebenen Weise befestigt sind und ebenfalls diagonal in die Gittermaschen 2 gerichtet sind. Insgesamt kann so eine Befestigung der Federn erreicht werden, bei der die Form der Stege nur sehr geringfügig beeinflußt wird (Fig. 4). An seiner Oberseite weist der Abstandhalter häufig Flächen auf, die eine über den Abstandhalter gerichtete Strömung des Kühlmittels erzeugen, und als Strömungsleitflächen 46 dienen.

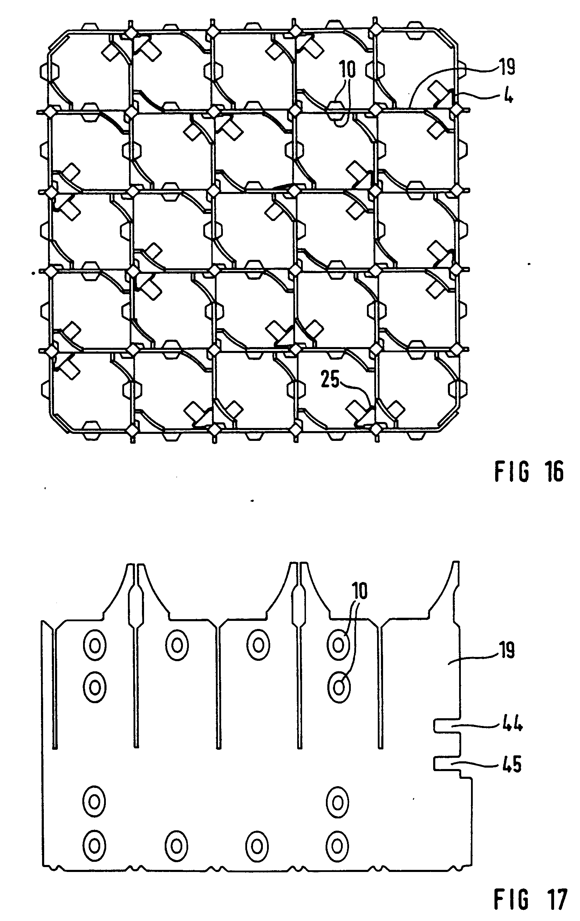

Ein drittes Ausführungsbeispiel der erfindungsgemäßen Feder ist in den Figuren 13, 14 und 15, der Einbau dieser Feder in den Abstandhalter Figur 16 und 17 dargestellt. Das Einsetzen der Feder nach dem dritten Ausführungsbeispiel in die Stege erfolgt wie beim zweiten Ausführungsbeispiel beschrieben. Jeweils ein Federende von zwei Federn ("Teilfedern") mit je einem Mittelteil 6, 6′ und jeweils wenigstens einer seitlichen Lasche 31, 31′ ist durch ein Verbindungsteil 24 zu einer Doppelfeder 25 verbunden. Das Verbindungsteil 24 durchsetzt eine Öffnung eines ersten Steges 19, so daß eine Feder auf der einen Seite des ersten Stegs 19, z.B. der Rückseite, und die andere Feder auf der anderen Seite des ersten Stegs, z.B. der Vorderseite, zu liegen kommt, und trägt wenigstens eine Kerbe 29, mit der die Doppelfeder 25 in der Öffnung des ersten Stegs 19 formschlüssig gehalten wird. Die Federn sind dabei in verschiedenen Maschen befestigt und diagonal in die Maschen hinein gerichtet, während die beiden seitlichen Laschen an einer den benachbarten Maschen zugewandten Seitenfläche eines den ersten Steg 19 kreuzenden zweiten Stegs 20 anliegen.

Wenigstens eine seitliche Lasche 31, vorzugsweise jede der beiden Laschen 31, 31′, durchsetzt die Öffnung des ersten Stegs 19 und trägt wieder mindestens eine Kerbe 15, mit der sie in der Öffnung 44 des ersten Stegs 19 formschlüssig gehalten ist. Bevorzugt sind das Verbindungsteil 24 und die beiden seitlichen Laschen 31, 32 wieder zu einem gleichschenkligen Dreieck 27 gebogen. Das Dreieck wird so befestigt, daß seine Basis 28 am zweiten Steg 20 anliegt und sich die Federn, die in benachbarte Maschen gerichtet sind, an den Seiten des Dreiecks befinden. Auch bei dieser Ausführungsform ist es von Vorteil, wenn die anderen Federenden der zwei Federn ebenfalls durch ein zweites Verbindungsteil 34 verbunden sind, das eine zweite Öffnung 45 des ersten Stegs 19 durchsetzt und wenn die anderen Federenden 7 der zwei Federn in der zweiten Öffnung analog zu der Verfahrensweise bei den ersten Federenden der zwei Federn befestigt sind, da dadurch eine erhöhte Stabilität erreicht wird.

Figur 16 zeigt eine Draufsicht auf den Abstandhalter 1 mit eingebauten Doppelfedern 25.

Sofern nach Abzug der Maschen, die Wasserstäbe, Führungsrohre etc. enthalten, eine ungerade Maschenzahl und eine ungerade Zahl erforderlicher Stäbe übrigbleibt, so kann in eine Masche (z.B. die Zentralmasche der Fig. 16) eine Einzelfeder eingesetzt werden. Eckfedern sind nicht erforderlich. Die Zahl der Einzelteile und Arbeitsgänge ist vor allem bei Verwendung der Doppelfedern gering, und über die Außenflächen des Abstandhalters überstehende Federteile, die vor allem bei Druckwasser-Reaktoren stören könnten, sind vermieden.

Der in Fig. 10 und Fig. 17 gezeigte Steg 19 verdeutlicht, daß die herkömmliche Stegform praktisch nur um die entsprechenden Öffnungen 44 und 45, in denen die Federn gehalten sind, und entsprechende (beim Steg der Fig. 17 nicht erforderliche) Montageöffnungen 43 zum Einsetzen der Federn ergänzt zu werden braucht.

Für die formschlüssige Verbindung der Federenden bzw. Laschen ist durchaus ein gewisses Spiel zugelassen, da im montierten Zustand die Stäbe gegen die Federn drücken und die Seitenflächen der Schenkel über die Schlitze in den Laschen und Verbindungsteilen fest an den Innenflächen der Maschenstege abgestützt sind, ohne daß einzelne Federteile auch bei Vibrationen des Brennstabes übermäßig belastet und bruchgefährdet wären. Die Formgebung der Federn ist sowohl für die Elastizität und Kräfteverteilung wie die Strömung des Kühlmittels günstig.

## Patentansprüche

1. Gitterförmiger Abstandhalter für ein ein Stabbündel enthaltendes Brennelement eines Druckwasser-Reaktors, wobei
a) der Abstandhalter quer zu dem Stabbündel und zwischen den Stäben des Stabbündels verlaufende, sich kreuzende Stege (19, 20) enthält, die eckige Gittermaschen bilden,
b) mindestens die Mehrzahl der Gittermaschen jeweils mindestens eine Feder (4) mit einem konvex um eine zum Stabbündel senkrechte Krümmungsachse in Form eines Zylindersegments gekrümmten Mittelteil (6) aufweisen, an dem ein die Masche durchsitzender Stab (3) seitlich abgestützt ist, und
c) jeder Mittelteil (6) an zwei in Richtung des Stabbündels anschließenden Federenden (7) jeweils in einer konvexen Krümmung in zwei zu dem Stabbündel ungefähr parallele Schenkel (8) übergeht, die mindestens an der dem Stab (3) zugewandten Seitenfläche eines Steges (19) der entsprechenden Gittermasche abgestützt sind,
**dadurch gekennzeichnet**, daß
d) jeweils der erste Steg (19) und ein zweiter Steg (20) eine Ecke der betreffenden Gittermasche bilden, von der aus das Mittelteil (6) diagonal in die Masche ragt, und
e) beide Schenkel jeweils im Abstand von der konvexen Krümmung abgestützt sind.

2. Gitterförmiger Abstandhalter nach Anspruch 1, **dadurch gekennzeichnet**, daß der Krümmungsradius der Feder (4) in etwa der axialen Erstreckung der Feder (4) im Einbauzustand entspricht.

3. Gitterförmiger Abstandhalter nach Anspruch 1 oder 2, **dadurch gekennzeichnet**, daß Radien der konvexen Krümmung an den Federenden (7) der Wanddicke der Feder (4) angepaßt sind.

4. Gitterförmiger Abstandhalter nach einem der Ansprüche 1 bis 3, **dadurch gekennzeichnet**, daß der Mittelteil (4) in Teile der Schenkel (8) ausläuft, die zumindest vor dem Einbau eines Brennstabes gegen die Einbaurichtung geneigt sind und aufeinander zulaufen, wobei vorzugsweise der Neigungswinkel klein (unter 10°, insbesondere vorzugsweise etwa 4°) ist.

5. Gitterförmiger Abstandhalter nach einem der Ansprüche 1 bis 4, **dadurch gekennzeichnet**, daß die Enden der aufeinander zulaufenden Schenkel (8) der Feder (4) einen Abstand voneinander haben, der ein Zusammendrücken der Federenden (7) beim Einsetzen der Feder (4) in die Gittermasche (22) ermöglicht.

6. Gitterförmiger Abstandhalter nach einem der Ansprüche 1 bis 5, **dadurch gekennzeichnet**, daß wenigstens ein Federende (7) ein Profil (21, 15, 45) trägt, mit dem die Feder formschlüssig am ersten und/oder zweiten Steg (19, 20) befestigt ist.

7. Gitterförmiger Abstandhalter nach einem der Ansprüche 1 bis 6, **dadurch gekennzeichnet**, daß innerhalb der besagten Mehrzahl der Gittermaschen jede Gittermasche eine einzige Feder enthält.

8. Gitterförmiger Abstandhalter nach Anspruch 1, **dadurch gekennzeichnet**, daß innerhalb der besagten Mehrzahl der Gittermasche jede Gittermasche nur eine Feder (4) und an zwei Stegen, die der diagonal in die Masche gerichteten Feder gegenüberliegen, jeweils mindestens eine Anschlagnoppe (10) für den Stab (3) trägt.

9. Gitterförmiger Abstandhalter nach Anspruch 7 oder 8, **dadurch gekennzeichnet**, daß wenigstens ein Federende (7) jeder Feder, vorzugsweise beide Federenden, eine erste und eine zweite seitliche Lasche trägt, wobei die erste Lasche (21) eine Öffnung (44) des ersten Steges (19) durchsetzt und wenigstens eine Kerbe (15) trägt, mit der sie in der Öffnung (44) dieses ersten Steges (19) formschlüssig gehalten wird, und die zweite Lasche (22) am zweiten Steg (20) aufliegt.

10. Gitterförmiger Abstandhalter nach Anspruch 9, **dadurch gekennzeichnet**, daß die erste Lasche die Öffnung (44) des ersten Steges (19) zweimal durchsetzt und daß wenigstens noch eine zweite Kerbe (17) zur formschlüssigen Halterung der ersten Lasche (21) in der Öffnung (44) vorgesehen ist.

11. Gitterförmiger Abstandhalter nach Anspruch 9 oder 10, **dadurch gekennzeichnet**, daß die zweite Lasche (22) ebenfalls die Öffnung des ersten Steges (19) durchsetzt und wenigstens eine Kerbe trägt, mit der sie in der Öffnung dieses ersten Steges (19) formschlüssig gehalten ist.

12. Gitterförmiger Abstandhalter nach Anspruch 10 oder 11, **dadurch gekennzeichnet,** daß die beiden Laschen zu einem Dreieck (23) gebogen sind, an dessen einer Seite sich der Mittelteil (6) befindet.

13. Gitterförmiger Abstandhalter nach einem der Ansprüche 9 bis 12, **dadurch gekennzeichnet** , daß die den ersten Steg (19) durchsetzende erste Lasche (21) an der der Gittermasche abgewandten Seitenfläche des ersten Steges (19) und die zweite Lasche (22) an der der Gittermasche zugewandten Seitenfläche des zweiten Steges (20) anliegt.

14. Gitterförmiger Abstandhalter nach Anspruch 7 oder 8, **dadurch gekennzeichnet**, daß
a) die besagte Mehrzahl der Gittermaschen jeweils von Maschenpaaren gebildet wird, wobei beide Gittermaschen jeweils nur eine Feder (6, 6′) enthalten, nebeneinander liegen und voneinander jeweils durch den ersten Steg getrennt sind,
b) die Federenden (7) beider Federn (6, 6′) jeweils an einer dem ersten Steg (19) abgewandten Seite an dem den ersten Steg kreuzenden zweiten Steg abgestützt sind, und
c) an einer dem ersten Steg zugewandten Seite wenigstens eines ersten Federendes beider Federn ein erstes Verbindungsteil (24) vorgesehen ist, das die beiden Federn verbindet und eine erste Öffnung des ersten Steges durchsetzt.

15. Gitterförmiger Abstandhalter nach Anspruch 14, **dadurch gekennzeichnet,** daß das Verbindungsteil (24) über mindestens eine Kerbe (29) formschlüssig in der ersten Öffnung des ersten Steges gehalten ist.

16. Gitterförmiger Abstandhalter nach Anspruch 14 oder 15, **dadurch gekennzeichnet,** daß die dem Steg abgewandte Seite eines ersten Federendes mindestens einer Feder, vorzugsweise beider Federn, eine am zweiten Steg abgestützte erste seitliche Lasche (31, 31′) trägt, die die Öffnung des ersten Steges ebenfalls durchsetzt und eine Kerbe (15) trägt, mit der sie formschlüssig in der ersten Öffnung des ersten Steges gehalten ist.

17. Gitterförmiger Abstandhalter nach Anspruch 16, **dadurch gekennzeichnet**, daß das Verbindungsteil (24) und die beiden ersten seitlichen Laschen zu einem gleichschenkeligen Dreieck (27) gebogen sind, dessen Basis (28) am zweiten Steg (20) anliegt und an dessen Seiten sich die in die benachbarte Maschen hineingerichteten Mittelteile der Federn befinden.

18. Gitterförmiger Abstandhalter nach Anspruch 16 oder 17, **dadurch gekennzeichnet**, daß die dem Steg abgewandte Seite eines zweiten Federendes mindestens einer Feder, vorzugsweise beider Federn, eine am zweiten Steg abgestützte zweite seitliche Lasche (32) trägt, die eine zweite Öffnung des ersten Steges durchsetzt und eine Kerbe trägt, mit der sie formschlüssig in der zweiten Öffnung des ersten Steges gehalten ist.

19. Gitterförmiger Abstandhalter nach einem der Ansprüche 14 bis 18, **dadurch gekennzeichnet,** daß ein zweites Verbindungssteil (34) eine zweite Öffnung des ersten Steges durchsetzt und zweite Federenden beider Federn miteinander verbindet.

20. Gitterförmiger Abstandhalter nach einem der Ansprüche 7 bis 19, **dadurch gekennzeichnet,** daß wenigstens in einer weiteren Gittermasche (26), vorzugsweise in wenigstens einer Ecke des Abstandhalters, eine C-förmige Feder (30) mit einem gewölbten Mittelteil und aufeinander zulaufenden Schenkeln an beiden Enden des Mittelteils vorgesehen ist, wobei mindestens an einem Federende eine Öffnung (12) vorgesehen ist, durch die wenigstens eine an der Ecke befestigte Klammer (14), vorzugsweise eine angeschweißte Klammer, greift.

21. Brennelement mit einem Stabbündel und mindestens einem gitterförmigen Abstandhalter nach einem der Ansprüche 1 bis 20 als seitliche Stütze der Stäbe des Stabbündels.

## Claims

1. Gridlike spacer for a fuel element of a pressurized water reactor containing a bundle of rods, wherein
a) the spacer comprises bars (19, 20) which cross one another, extend transversely to the rod bundle and between the rods of the rod bundle, and which form polygonal grid meshes,
b) at least the majority of the grid meshes each comprise at least one spring (4) with a middle part (6) curved convexly in the form of a cylindrical segment around an axis of curvature at right angles to the rod bundle, a rod (3) passing through the mesh being laterally supported on the said middle part, and
c) each middle part (6) extends at two adjoining spring ends (7) in the direction of the rod bundle in convex curves respectively into two legs (8) approximately parallel to the rod bundle, the said legs being supported at least on the side surface of a bar (19) of the corresponding grid mesh which faces towards the rod (3),
characterized in that
d) the first bar (19) and a second bar (20) in each case form a corner of the respective grid mesh, from which the middle part (6) projects diagonally into the mesh, and
e) both legs are respectively supported at a distance from the convex curve.

2. Gridlike spacer according to claim 1, characterized in that the radius of curvature of the spring (4) corresponds approximately to the axial extent of the spring (4) in the installed state.

3. Gridlike spacer according to claim 1 or 2, characterized in that radii of the convex curve at the spring ends (7) are adapted to the wall thickness of the spring (4).

4. Gridlike spacer according to one of claims 1 to 3, characterized in that the middle part (4) ends in parts of the legs (8) which are inclined relative to an installation direction and converge toward one another, at least before the installation of a fuel rod, the angle of inclination preferably being small (under 10°, more particularly preferably about 4°).

5. Gridlike spacer according to one of claims 1 to 4, characterized in that the ends of the legs (8) of the spring (4) which converge toward one another are at a distance apart from one another, enabling the spring ends (7) to be compressed when the spring (4) is inserted into the grid mesh (22).

6. Gridlike spacer according to one of claims 1 to 5, characterized in that at least one spring end (7) has a profile (21, 15, 45) with which the spring is attached to the first and/or second bar (19, 20) in a form-locking manner.

7. Gridlike spacer according to one of claims 1 to 6, characterized in that inside the aforementioned majority of grid meshes, each grid mesh contains a single spring.

8. Gridlike spacer according to claim 1, characterized in that inside the aforementioned majority of grid meshes, each grid mesh has only one spring (4), and on two bars situated opposite the spring directed diagonally into the mesh each has at least one stop knob (10) for the rod (3).

9. Gridlike spacer according to claim 7 or 8, characterized in that at least one spring end (7) of each spring, preferably both spring ends, has a first and a second lateral lug, the first lug (21) passing through an opening (44) of the first bar (19) and having at least one notch (15) with which it is held in the opening (44) of this first bar (19) in a form-locking manner, and the second lug (22) rests on the second bar (20).

10. Gridlike spacer according to claim 9, characterized in that the first lug passes through the opening (44) of the first bar (19) twice, and in that at least another, second notch (17) is provided for the form-locking retention of the first lug (21) in the opening (44).

11. Gridlike spacer according to claim 9 or 10, characterized in that the second lug (22) likewise passes through the opening in the first bar (19) and has at least one notch with which it is held in the opening of this first bar (19) in a form-locking manner.

12. Gridlike spacer according to claim 10 or 11, characterized in that the two lugs are bent into a triangle (23), the middle part (6) being located on one side thereof.

13. Gridlike spacer according to one of claims 9 to 12, characterized in that the first lug (21) passing through the first bar (19) rests on the side surface of the first bar (19) facing away from the grid mesh, and the second lug (22) rests on the side surface of the second bar (20) facing towards the grid mesh.

14. Gridlike spacer according to claim 7 or 8, characterized in that
a) the aforementioned majority of the grid meshes are each formed by pairs of meshes, each of the two grid meshes comprising only one spring (6, 6′), being situated next to one another and being separated from one another in each case by the first bar,
b) the spring ends (7) of the two springs (6, 6′) are each supported on a side facing away from the first bar (19) on the second bar crossing the first bar, and
c) a first connecting part (24) is provided on a side, facing towards the first bar, of at least a first spring end of the two springs, the said connecting part connecting the two springs and passing through a first opening of the first bar.

15. Gridlike spacer according to claim 14, characterized in that the connecting part (24) is held by at least one notch (29) in the first opening of the first bar in a form-locking manner.

16. Gridlike spacer according to claim 14 or 15, characterized in that the side, facing away from the bar, of a first spring end of at least one spring, preferably both springs, has a first lateral lug (31, 31′) supported on the second bar, which likewise passes through the opening of the first bar and has a notch (15) with which it is held in the first opening of the first bar in a form-locking manner.

17. Gridlike spacer according to claim 16, characterized in that the connecting part (24) and the two first lateral lugs are bent into an equilateral triangle (27), of which the base (28) rests on the second bar (20) and on the sides of which are located the middle parts of the springs directed into the adjacent meshes.

18. Gridlike spacer according to claim 16 or 17, characterized in that the side, facing away from the bar, of a second spring end of at least one spring, preferably both springs, has a second lateral lug (32) supported on the second bar, the said lug passing through a second opening of the first bar and having a notch with which it is held in the second opening of the first bar in a form-locking manner.

19. Gridlike spacer according to one of claims 14 to 18, characterized in that a second connecting part (34) passes through a second opening of the first bar and joins together second spring ends of the two springs.

20. Gridlike spacer according to one of claims 7 to 19, characterized in that at least in one further grid mesh (26), preferably in at least one corner of the spacer, a C-shaped spring (30) with an arched middle part and legs which converge towards one another is provided at the two ends of the middle part, an opening (12) being provided at least at one spring end through which at least one clamp (14) attached to the corner, preferably a welded-on clamp, engages.

21. Fuel element comprising a rod bundle and at least one gridlike spacer according to one of claims 1 to 20, as a lateral support for the rods of the rod bundle.

## Revendications

1. Entretoise en forme de grille pour un assemblage combustible, contenant un faisceau de crayons, d'un réacteur à eau sous pression, et
a) l'entretoise contenant des barrettes (19,20), qui s'étendent transversalement au faisceau de crayons et entre les crayons du faisceau de crayons, qui se croisent et qui forment des mailles rectangulaires de la grille,
b) au moins la multiplicité des mailles de la grille comportant chacune au moins un ressort (4) ayant une partie médiane (6), qui est cintrée avec une forme convexe sous la forme d'un segment de cylindre autour d'un axe de cintrage perpendiculaire au faisceau de crayons et sur laquelle prend appui latéralement un crayon (3) qui traverse la maille, et
c) chaque partie médiane (6) se prolonge, en deux extrémités (7) du ressort, qui s'y raccordent dans la direction du faisceau de crayons, par une courbure convexe, sous la forme de deux branches (8) approximativement parallèles au faisceau de crayons et qui prennent appui au moins sur la surface latérale, tournée vers le crayon (3), d'une barrette (19) de la maille correspondante de la grille,
caractérisée par le fait que
d) la première barrette (19) et la seconde barrette (20) forment un coin de la maille considérée de la grille, à partir duquel la partie médiane (6) pénètre en diagonale dans la maille, et
e) les deux branches sont supportées chacune à distance de la partie cintrée convexe.

2. Entretoise en forme de grille suivant la revendication 1, caractérisée par le fait que le rayon de courbure du ressort (4) correspond approximativement à l'étendue axiale du ressort (4) à l'état monté.

3. Entretoise en forme de grille suivant la revendication 1 ou 2, caractérisée par le fait que des rayons de la partie cintrée et convexe aux extrémités (7) du ressort sont adaptés à l'épaisseur de paroi du ressort (4).

4. Entretoise en forme de grille suivant l'une des revendications 1 à 3, caractérisée par le fait que la partie médiane (6) se prolonge par des parties des branches (8), qui, au moins avant le montage d'un crayon combustible, sont inclinées par rapport à la direction de montage et convergent l'une vers l'autre, l'angle d'inclinaison étant de préférence faible (inférieur à 10° et notamment égal de préférence à environ 4°).

5. Entretoise en forme de grille suivant l'une des revendication 1 à 4, caractérisée par le fait que les extrémités des branches (8), qui convergent l'une vers l'autre, du ressort (4) sont à une distance l'une de l'autre, qui permet une compression des extrémités (7) du ressort (4) lors de l'insertion de ce dernier dans la maille (22) de la grille.

6. Entretoise en forme de grille suivant l'une des revendications 1 à 5, caractérisée par le fait qu'au moins une des extrémités (7) du ressort porte un profilé (21,15, 45), au moyen duquel le ressort est fixé selon une liaison par formes complémentaires à la première et/ou à la seconde barrette (19,20).

7. Entretoise en forme de grille suivant l'une des revendications 1 à 6, caractérisée par le fait que dans ladite multiplicité des mailles de la grille chaque maille de la grille contient un seul ressort.

8. Entretoise en forme de grille suivant la revendication 1, caractérisée par le fait que parmi ladite multiplicité de mailles de la grille, chacune d'elle comporte seulement un ressort (4), et porte respectivement au moins un bouton de butée (10) pour le crayon (3), sur deux barrettes qui sont situées en vis-à-vis du ressort disposé en diagonale dans la maille.

9. Entretoise en forme de grille suivant la revendication 7 ou 8, caractérisée par le fait qu'au moins une extrémité (7) de chaque ressort et de préférence les deux extrémités du ressort portent des première et seconde attaches latérales, la première attache (21) traversant une ouverture (44) de la première barrette (19) et portant au moins une encoche (15), par laquelle elle est retenue selon une liaison par formes complémentaires dans l'ouverture (44) de cette première barrette (19), tandis que la seconde attache (22) s'applique sur la seconde barrette (20).

10. Entretoise en forme de grille suivant la revendication 9, caractérisée par le fait que la première attache traverse deux fois l'ouverture (44) de la première barrette (19) et qu'au moins encore une seconde encoche (17) est prévue pour retenir, selon une liaison par formes complémentaires, la première attache (21) dans l'ouverture (44).

11. Entretoise en forme de grille suivant la revendication 9 ou 10, caractérisée par le fait que la seconde attache (22) traverse également l'ouverture de la première barrette (19) et porte au moins une encoche, au moyen de laquelle elle est retenue selon une liaison par formes complémentaires dans une ouverture de cette première barrette (19).

12. Entretoise en forme de grille suivant la revendication 10 ou 11, caractérisée par le fait que les deux attaches sont repliées pour former un triangle (23), le long d'un côté duquel se trouve la partie médiane (6).

13. Entretoise en forme de grille suivant l'une des revendications 9 à 12, caractérisée par le fait que la première attache (21), qui traverse la première barrette (19), s'applique sur la surface latérale, éloignée de la maille de la grille, de la première barrette (19) et que la seconde attache (22) s'applique sur la surface latérale, tournée vers la maille de la grille, de la seconde barrette (20).

14. Entretoise en forme de grille suivant la revendication 7 ou 8, caractérisée par le fait que
a) ladite multiplicité de mailles de la grille est formée respectivement par des couples de mailles, les deux mailles de la grille contenant chacune seulement un ressort (6,6′), étant disposées côte-à-côte et étant séparées l'une de l'autre par la première barrette,
b) les extrémités (7) des deux ressorts (6,6') prennent appui respectivement sur un côté, éloigné de la première barrette (19), sur la seconde barrette qui croise la première barrette, et
c) sur un côté, tourné vers la première barrette, d'au moins une première extrémité des deux ressorts est prévue une première partie (24) de liaison, qui relie les deux ressorts et traverse une première ouverture de la première barrette.

15. Entretoise en forme de grille suivant la revendication 14, caractérisée par le fait que la partie de liaison (24) est retenue, par l'intermédiaire d'au moins une encoche (29) , selon une liaison par formes complémentaires dans la première ouverture de la première barrette.

16. Entretoise en forme de grille suivant la revendication 14 ou 15, caractérisée par le fait que le côté, éloigné de la barrette, d'une première extrémité d'au moins un ressort, de préférence des deux ressorts, porte une première attache latérale (31,31′), qui prend appui sur la seconde barrette, qui traverse également l'ouverture de la première barrette et qui porte une encoche (15), par laquelle elle est retenue selon une liaison par formes complémentaires dans la première ouverture de la première barrette.

17. Entretoise en forme de grille suivant la revendication 16, caractérisée par le fait que la partie de liaison (24) et les deux premières attaches latérales sont courbées pour former un triangle isocèle (27), dont la base (28) s'applique sur la seconde barrette (20) et sur les deux côtés duquel se trouvent les parties médianes des ressorts, qui sont dirigées dans les mailles voisines.

18. Entretoise en forme de grille suivant la revendication 16 ou 17, caractérisée par le fait que le côté, tourné à l'opposé de la barrette, d'une seconde extrémité d'au moins un ressort et de préférence des deux ressorts porte une seconde attache latérale (32), qui prend appui sur la seconde barrette, traverse une seconde ouverture de la première barrette et porte une encoche, au moyen de laquelle elle est retenue selon une liaison par formes complémentaires dans la seconde ouverture de la première barrette.

19. Entretoise en forme de grille suivant l'une des revendications 14 à 18, caractérisée par le fait qu'une seconde partie de liaison (34) traverse une seconde ouverture de la première barrette et relie entre elles des secondes extrémités des deux ressorts.

20. Entretoise en forme de grille suivant l'une des revendication 7 à 19, caractérisée par le fait qu'au moins dans une autre maille (26) de la grille, de préférence dans au moins un coin de l'entretoise, est prévu un ressort en forme de C (30) ayant une partie médiane cintrée et des branches, qui convergent l'une vers l'autre et sont situées aux deux extrémités de la partie médiane, tandis qu'à au moins une extrémité du ressort est prévue une ouverture (12), dans laquelle s'engage au moins une pince (14) fixée au coin, de préférence une pince soudée.

21. Assemblage combustible comportant un faisceau de crayons et au-moins une entretoise en forme de grille suivant l'une des revendications 1 à 20, en tant qu'appui latéral des crayons du faisceau de crayons.
